(19) **Europäisches Patentamt / European Patent Office / Office européen des brevets**

(11) **EP 2 354 783 B1**

(12) **EUROPEAN PATENT SPECIFICATION**

(45) Date of publication and mention
of the grant of the patent:
**24.10.2012  Bulletin 2012/43**

(51) Int Cl.:
***G01N 25/72*** *(2006.01)*

(21) Application number: **10196519.2**

(22) Date of filing: **22.12.2010**

(54) **Thermal inspection system and method incorporating external flow**

Wärmeinspektionssystem und Verfahren mit externem Durchfluss

Système d'inspection thermique et procédé incorporant un écoulement externe

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2010  US 683638**

(43) Date of publication of application:
**10.08.2011  Bulletin 2011/32**

(73) Proprietor: **General Electric Company
Schenectady, NY 12345 (US)**

(72) Inventors:
• **Allen, Jason Randolph
  Niskayuna, NY 12309 (US)**
• **Bunker, Ronald Scott
  Niskayuna, NY 12309 (US)**
• **Crosby, Jared Michael
  Naskayuna, NY 12309 (US)**

(74) Representative: **Williams, Andrew Richard et al
Global Patent Operation-Europe
GE International Inc
15 John Adam Street
London WC2N 6LU (GB)**

(56) References cited:
**WO-A2-2004/031726**

• **JOHNSON L P ET AL: "Measurements with a heat flux microsensor deposited on a transonic turbine blade", ICIASF '95 RECORD. INTERNATIONAL CONGRESS ON INSTRUMENTATION IN AEROSPACE SIMULATION FACILITIES (CAT. NO.95CH3482-7) IEEE NEW YORK, NY, USA, 1995, pages 37/1-7, XP002635973, ISBN: 0-7803-2088-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

The invention relates generally to thermal inspection systems and methods and, more particularly, to thermal inspection systems and methods that include external flow over the component under test to develop appropriate film cooling and aero distributions.

Various approaches to cooling hot gas path components, such as turbine airfoils, have been proposed and implemented to increase the upper operating temperature of the engines. For example, high pressure turbine blades typically include internal cooling comprising complex flow circuits with blind flow holes, such as impingement jets, which are formed in an interior shell for cooling the external shell of an integrally cast double-wall turbine airfoil. Conventionally, these cooled parts are inspected by indirect measurement methods to assess an associated effect. One example of these indirect measurement techniques is the measurement of airflow through a turbine airfoil and associating the readings with film cooling effectiveness. This is an indirect and extrapolated measurement of the desired film and cooling effectiveness and internal heat transfer coefficients, and the current indirect method provides at best a bulk indication whether a part has met its thermal design intent.

In practice, there are no inspection steps to directly measure film effectiveness and internal heat transfer coefficients for hot gas path components. Rather, airflow, backflow measurements, and pin-checking are the only measurements that extrapolate to heat transfer performance. Consequently, hot gas path components that do not perform thermally as intended (but that pass the indirect inspections) could enter the field. Other inspections and dimensional specifications of the component also impact the thermal performance of an airfoil. Again, a hot gas path component may dimensionally pass, but still fail thermally in the field. For example, film blow off can occur with subtle and geometrically immeasurable flaws in the film holes and film hole diffuser shapes.

It would therefore be desirable to provide a nondestructive inspection system and method to qualify a part's thermal performance directly.

Johnson L. P. et al ("Measurements with a heat flux microsensor deposited on a transonic turbine blade", International Congress on Instrumentation in Aerospace Simulation Facilities, IEEE New York, 1995, pages 37.1-7) discloses a system and method for determining the effect of variation in Mach number of a flow over the external surface of a blade test section in a wind tunnel upon the location of the shock wave formed in the vicinity of the blade's trailing edge, and the consequent effect of the variation in the Mach number on heat flux and temperature for the blade.

BRIEF DESCRIPTION

The present invention provides a thermal inspection method according to claim 1 herein.

DRAWINGS

These and other features, aspects, and advantages of the present invention will become better understood when the following detailed description is read with reference to the accompanying drawings in which like characters represent like parts throughout the drawings, wherein:

FIG. 1 schematically depicts aspects of a thermal inspection system embodiment of the invention;

FIG. 2 illustrates a cascade arrangement for use in the thermal inspection system of FIG. 1;

FIG. 3 is a flow chart illustrating a thermal inspection method embodiment of the invention;

FIG. 4 is a flow chart illustrating an overall cooling effectiveness embodiment of the inspection method;

FIG. 5 is a flow chart that illustrates a transient thermal response embodiment of the inspection method; and

FIG. 6 is a flow chart that illustrates another transient thermal response embodiment of the inspection method.

DETAILED DESCRIPTION

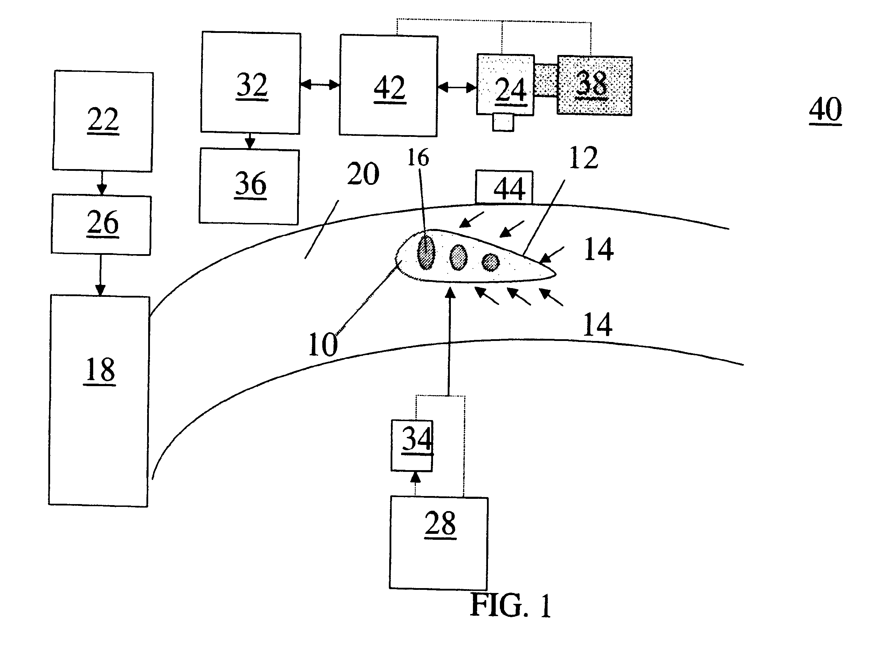

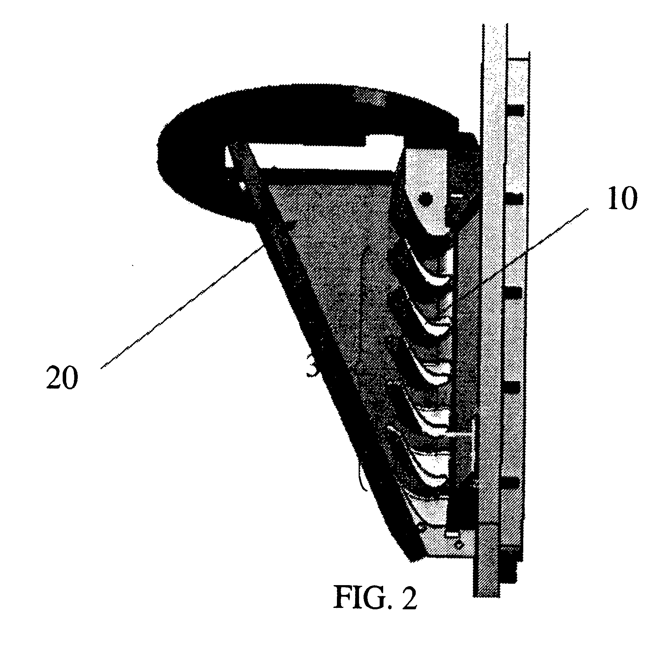

A thermal inspection system 40 is described with reference to FIGS. 1 and 2. The thermal inspection system can be used to inspect a wide variety of components, including, without limitation, turbine airfoils, turbine vanes and blades and their platforms and endwalls, turbine shrouds, assemblies forming combustor chambers, assemblies forming transition pieces, blades having attached tip shrouds, flow distribution diaphragms, and exhaust nozzle assemblies.

As indicated, for example, in FIG. 1, the thermal inspection system 40 includes a wind tunnel 20 configured to create a predetermined Mach number distribution for an external surface 12 of a component 10 to be inspected. The thermal inspection system 40 further includes a gas supply 22 for supplying a gas at a known temperature T into the wind tunnel 20 to create an external flow of gas over the external surface 12 of the component 10 in accordance with the predetermined Mach number distribution. An example wind tunnel configuration is discussed below with reference to FIG. 2. For the example arrangement shown in FIG. 1, the gas from the gas supply 22 enters the wind tunnel via a manifold 18. One non-limiting example for the gas supply 22 is a compressed air supply, for example a compressor. Beneficially, the inclusion of external flow over the component facilitates the development of appropriate film cooling and aerodynamic distributions.

The thermal inspection system 40 further includes a thermal monitoring device 24 configured to detect a plurality of surface temperatures, either directly or indirectly, of the component 10 to generate an external surface temperature distribution for the external surface of the component. The term "indirectly" as used herein, should be understood to encompass detecting at least one surface temperature by measuring radiance and performing a necessary conversion or calibration to obtain the temperature. For particular embodiments, the thermal monitoring device 24 comprises an infrared detector 24. Non-limiting examples of infrared detectors include infrared (IR) cameras, actuating pyrometers, and single point pyrometers.

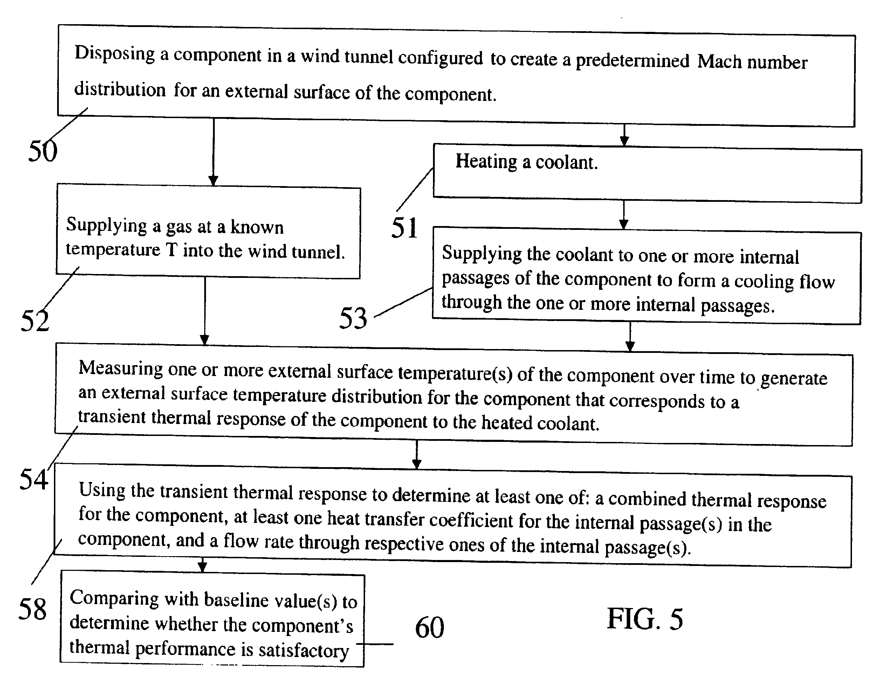

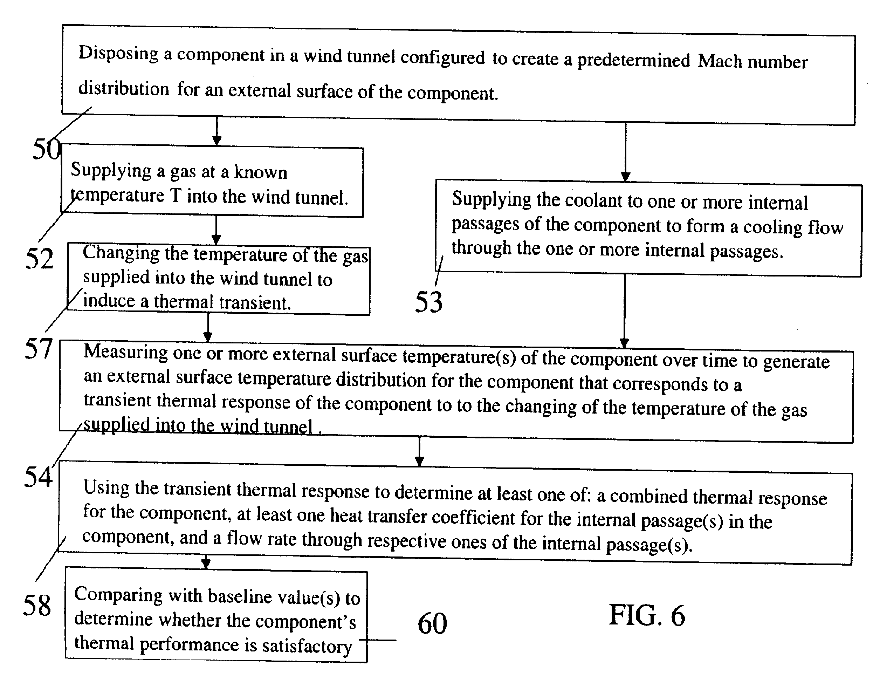

The thermal inspection system 40 further includes a processor 32 configured to use the external surface temperature distribution to perform a quality control inspection of the component 10. The processor 32 is discussed in greater detail below. The quality control inspection may be accomplished, for example, by comparison with a baseline value to determine whether the thermal performance of the component is satisfactory, as discussed below with reference to FIGS. 5 and 6.

For the example arrangement depicted in FIG. 1, the thermal monitoring device 24 is mounted to a manipulator 38 for automation. One non-limiting example for the manipulator 38 is a FANUC LR Mate 200 iC 6 axis robotic arm. For this example, the robotic arm is mounted to a base, which is fully enclosed with appropriate safety interlocks. In addition, one or more IR windows 44 may be provided in the wind tunnel 20 for imaging the component 10 with the IR imager 10.

For the illustrated example, the thermal inspection system 40 further includes a heat source 26 for heating the gas to the known temperature T prior to supplying the gas into the wind tunnel 20. For certain arrangements, vitiated air (namely air heated by direct combustion) is supplied to the wind tunnel. For other arrangements, non-vitiated air is supplied to the wind tunnel, for example air that is heated by a heat exchanger.

FIG. 2 illustrates an example arrangement for generating an external flow of gas over the external surface 12 of the component 10 in accordance with a predetermined Mach number distribution. For the example arrangement shown in FIG. 2, the thermal inspection system 40 further includes a cascade 30 disposed in the wind tunnel 20 to facilitate generating the external flow of gas over the external surface of the component 10 in accordance with the predetermined Mach number distribution. Although the example configuration shown in FIG. 2 is relatively complex and includes a number of components, the cascade could also be as simple as two shaped walls bounding the component (a two passage cascade), in effect a curved wind tunnel. Beneficially, the cascade provides a cross-flow on the exterior of the component and cooling air to the interior of the component. It should be noted, that the configuration shown in FIG. 1 is merely an illustrative example, and the invention is not limited to any specific cascade. Rather, the type of cascade employed (number of elements, geometry, and overall arrangement) will be dictated by the desired Mach number distribution.

In order to obtain values for the film effectiveness and cooling effectiveness, hot cross-flow and cooling and film flows are required. In particular, the film flow will cover the hot gas path component 10 surface providing the intended protection against the hot flow. For the arrangement shown in FIG. 1, the hot gas flow is provided by the heat source 26 in combination with the gas supply 22. The cascade 30 may be provided to supply the appropriate flow turning.

For the configuration shown in FIG. 1, the thermal inspection system 40 further includes a coolant source 28 for supplying a coolant to one or more internal passages 16 of the component 10 to form a cooling flow through the one or more internal passages. Example cooling passages 16 are shown in cross-section in FIG. 1. Although not shown in FIG. 1, the component can be mounted on a flow stand (not shown). The flow stand may be equipped with means for varying the temperature and flow rate of the coolant supplied to the component. The coolant is then supplied to the component via the flow stand or more particularly, via a plenum (not shown in FIG. 1) that is in fluid communication with at least one internal passage 16 of the component 10. Non-limiting examples of the coolant include air, nitrogen, steam, water and any Newtonian fluid. Further, at least one flow meter (not shown in FIG. 1) may be provided, where the flow meter is configured to measure the cool flow supplied to the component. In addition, at least one pressure sensor (not shown in FIG. 1) may be provided, where the pressure sensor(s) is (are) configured to measure the pressure of the cool flow supplied to the plenum.

In operation, the temperature distribution for the component is allowed to reach a steady-state recovery temperature distribution, at which point, cooling air is supplied to the component. The internal cooling cools the component, and the film flow provides a cool air buffer against the hotter cross-flow. The resulting component surface temperatures are recorded with the thermal imaging device and used to calculate the film and cooling effectiveness values, respectively. The film effectiveness and cooling effectiveness values can then be compared to expected values from analyses or to a tolerance defined by known thermally good parts.

For particular arrangements, the external surface temperature distribution corresponds to the measured external surface temperature for a number of locations (a few illustrative examples of which are indicated by arrows and reference numeral 14) on the external surface of the component 10. For these arrangements, the processor 32 is configured to use the external surface temperature distribution to determine an overall cooling effectiveness for the component 10 for at least a subset of the locations 14 on the external surface 12 of the component 10. In addition, for the illustrated example, camera control electronics 42 are operatively connected to the imager 24, manipulator 38 and processor 32 to control and automate movement of the imager as well as the collection of images from the imager. In other arrangements, the processor 32 may be configured to control and automate movement of a sensor (not shown) or optical piece (not shown), for example a prism, in order to automate the collection of the thermal inspection data.

The processor is typically capable of capturing an image frame rate of adequate frequency, for example greater than 10 frames per second and typically greater than 15 frames per second, from the imager. It should be noted that the present invention is not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those skilled in the art.

In FIG. 1, the thermal inspection system 40 further comprises a display monitor 36 coupled to the processor 32 to display the results of the thermal inspection.

The overall cooling effectiveness can be viewed as the sum of the film cooling effectiveness, internal cooling effectiveness and thermal conductivity of the component. The overall cooling effectiveness value may be controlled by selectively controlling one or more of these three contributions. For example, if the component is formed from a low thermal conductivity material (for example, using a ceramic or plastic component in the design phase), then the resulting cooling effectiveness would correspond to primarily to the contributions of the film cooling effectiveness and the internal cooling effectiveness. Namely, for this example, the film cooling effectiveness and the internal cooling effectiveness would provide the dominant contribution to the overall cooling effectiveness. Similarly, if the thermal inspection is performed on a test component in the absence of external flow, the resulting cooling effectiveness would correspond primarily to the internal cooling effectiveness and thermal conductivity for the component. In this manner, the thermal inspection system can be used in the design phase to develop improved cooling designs for the components under test.

These examples describe methods of biasing the thermal response of a test component such that one or more of the cooling effectiveness contributors is dominant over the others. By testing at least two, and preferably more than two, variations of the biasing, multiple data sets are obtained from which a regression analysis will determine the correct quantified magnitude of the desired distribution, be that the internal heat transfer coefficients, or the external film effectiveness, or the thermal conductivity contribution to cooling effectiveness. A regression analysis using two or more data sets is required because none of the thermal effectiveness contributors (internal cooling, film cooling, and thermal conduction) can be absolutely and completely eliminated in a test. For example, if the component is tested in the absence of external flow, the film cooling no longer adheres to the component surface and so is almost, but not completely, ineffective. Testing the component with two differing material thermal conductivities then provides two different data sets, one which has stronger conduction effects that the other. The regression analysis then allows determination of the internal cooling effectiveness and the conduction contribution for various material conductivities. If the thermal response is strongly non-linear due to flow or property changes, then more than two data sets will be desired. Another way to achieve similar results is to vary the fluid used as the cooling fluid inside the component and as film cooling, for example, to test the component with air and also with $CO_2$, and/or to vary the temperature of the cooling fluid, and/or the mass flow rate of the coolant. As an example, testing with the external flow over the component can be performed with variations of cooling fluid type, temperature, and flow rate that yield the same film cooling parameters but have differing internal cooling effectiveness. A regression analysis then allows determination of the film cooling effectiveness and the internal cooling effectiveness.

For the example arrangement shown in FIG. 1, the thermal inspection system 40 further includes a heat source 34 for heating the coolant prior to supplying the heated coolant to the one or more internal passages 16 of the component 10 to induce a thermal transient in the component. One non-limiting example for the heat source 34 is a mesh (resistive) heater. As used herein, the term "transient thermal response" includes one or more local thermal responses of the component 10, or spatial thermal responses of regions of the component 10, or of the entire component 10. For this arrangement, the thermal monitoring device 24 is configured to measure the external surface temperature of the component over time, such that the generated external surface temperature distribution corresponds to a transient thermal response of the component 10 to the heated coolant. It should be noted that the thermal response is typically obtained as a set of intensity values for the images. The intensity values can be correlated with temperature values to determine the temperature. Although the operations described herein as described as being performed on temperature values, one skilled in the art will recognize that operations may be carried out with the intensity values.

For this thermal transient measurement the processor 32 may be configured to use the transient thermal response to determine at least one of: a combined thermal response for the component 10, at least one heat transfer coefficient for respective ones of the one or more internal passages 16 in the component, and a flow rate through respective ones of the one or more internal passages 16. As used herein, the term 'combined thermal response' reflects all thermal influences for the component 10, including but not limited to all internal cooling, film cooling, and material conduction and thermal diffusivity effects resulting from internal ribs, film holes, internal bumps, crossover holes, and other features. Beneficially, by determining the combined thermal response of all thermal influences in a manufactured part, the present technique can provide an immediate measure of thermal acceptability or rejection for a cooled part, especially for a complex cooled part, such as a turbine airfoil. Further, the term 'flow rate' is understood to encompass an actual quantity and a flow rate characteristic such as, but not limited to, a flow coefficient. For certain configurations, the thermal monitoring device 24 is an infrared camera 24 configured to capture multiple images corresponding to a thermal response of the component 10 to the external and coolant flows, where the processor 32 is configured to generate the transient thermal response of the component from the images.

Example heat transfer coefficients $\{h_{lmn}\}$ are discussed in commonly assigned, copending U.S. Patent publication No. 2009255332 Bunker et al., "Thermal inspection system and method." It should be noted that although the thermal monitoring device 24 typically detects a projected surface as a two-dimensional representation, the heat transfer coefficients $\{hl_{mn}\}$ correspond to the three-dimensional component. The heat transfer coefficients may be calculated using the techniques described in U.S. Patent publication No. 2001255332 and/or in U.S. Patent No. 6,804,622, Bunker et al. "Method and Apparatus for Non-destructive Thermal Inspection," both of which references are hereby incorporated by reference in their entirety. The heat transfer coefficients $\{h_{lmn}\}$ corresponding to respective locations $\{l,m,n\}$ within the internal passage can be used to determine at least one of (a) a flow rate through respective ones of the openings for the internal passage(s), and (b) a cross-sectional area for respective ones of the openings for the internal passage(s).

For example, and as discussed in U.S. Patent publication No. 2001255332, once the heat transfer coefficients $\{h_{lmn}\}$ are known, the following equation can be solved to determine either the flow rate through respective ones of the opening(s) for the internal passage(s)or (b) the cross-sectional area for respective ones of the opening(s) for the internal passage(s):

$$h=(k/D)CRe^mPr^n, \qquad\qquad\qquad \text{Eq. 1}$$

where k is the thermal conductivity of the fluid, D is the hydraulic diameter of the connecting orifice, Re is the Reynolds number, and Pr is the Prandtl number. C, m and n are correlation constants. Equation 1 applies to a very large range of flow situations applicable to internal flows, whether compressible or incompressible. For any particular inspection geometry case, the correlation constants are known from prior research and testing, such as that performed in the design and development of the nominal part. To determine the cross-sectional area for one of the openings for the internal passages, Equation 1 is solved for D. If the hydraulic diameter of the orifice(s) is known, for example determined by x-ray imaging, then Equation 1 is solved for the Reynolds number, which provides the flow rate through the orifice. If the hydraulic diameter, or area, is not known, but the inspection is for a single orifice only, then Equation 1 is solved for the hydraulic diameter D. If the hydraulic diameter(s) is not known, and there are multiple orifices, then Equation 1 is solved for the average hydraulic diameter of the group of orifices. Alternately in this latter case, multiple inspections may be executed with various flow rates. Although the various hydraulic diameters will not change between inspections, the heat transfer coefficients will change. A regression analysis can then be used to determine the individual hydraulic diameters and flow rates knowing that the form and fit of Equation I remains unchanged.

In addition, the processor 32 may be further configured to compare at least one of the flow rate, the at least one heat transfer coefficient, and the combined thermal response of at least a portion of the component to at least one baseline value to determine whether a thermal performance of the component is satisfactory. In this manner, the quality control inspection of the component may be accomplished. Non-limiting examples of the baseline values include one or more local values, mean value of a group of local values and a standard deviation of a group of local values. There are various stages at which the baseline values may be defined. In one embodiment, measurements performed on components 10 in a "new" and an optimal condition prior to any degradation effects form a baseline for subsequent measurements performed. In another embodiment, the baseline values are obtained by performing a transient thermal analysis prior to installation of the component 10 on a turbine engine, for example, by performing multiple bench tests on the component 10. In yet another embodiment, the baseline values are redefined by obtaining and analyzing measurements taken during any point in-service; such a redefined baseline would act as a comparison data for subsequent measurements going forward in time.

In addition and as noted above, the thermal inspection system 40 may further include a display 36 for displaying a result of the comparison with the baseline value.

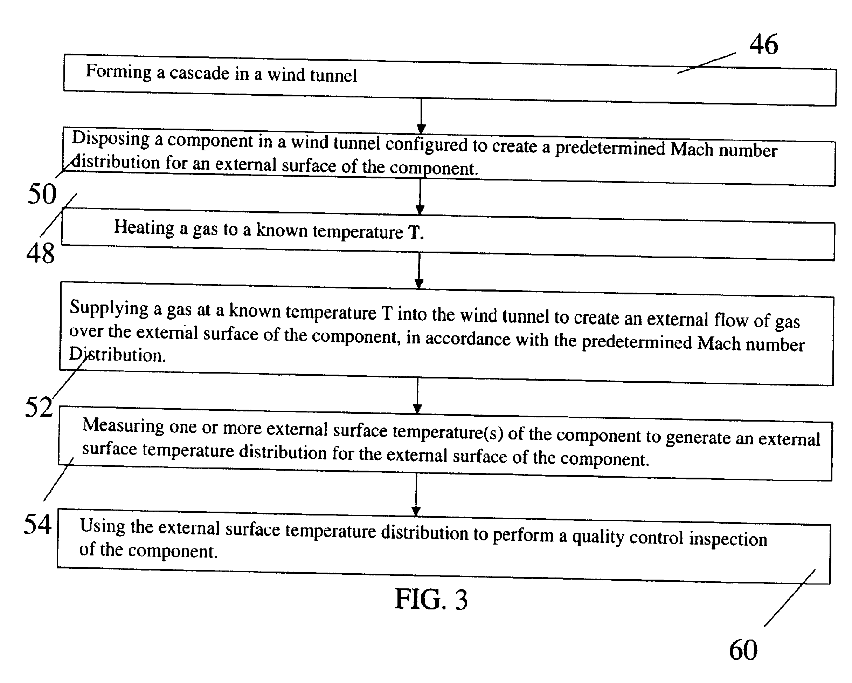

A thermal inspection method is described with reference to FIGS. 3-6. The thermal inspection method includes at step 50, disposing a component (element 10 in FIG. 1) in a wind tunnel (element 20 in FIG. 1) configured to create a predetermined Mach number distribution for an external surface (indicated by reference numeral 12 in FIG. 1) of the component. The thermal inspection method further includes at step 52, supplying a gas at a known temperature T into the wind tunnel to create an external flow of gas over the external surface of the component in accordance with the predetermined Mach number distribution. The method further includes at step 54 measuring the external surface temperature directly or indirectly (at one or more locations) of the component to generate an external surface temperature distribution for the external surface of the component. As discussed above, the external surface temperatures can be measured, directly or indirectly. For particular embodiments, infrared radiography is employed. According to particular embodiments, the predetermined Mach number distribution for the component to be inspected is determined. For example, the predetermined Mach number distribution may be determined numerically (via computer simulations, such as computational fluid dynamic (CFD) simulations), or empirically by placing a model of the component in the wind tunnel to measure the static pressure distribution. The thermal inspection method further includes at step 60 using the external surface temperature distribution to perform a quality control inspection of the component. This quality control inspection may be accomplished, for example, by comparison with a baseline value to determine whether the thermal performance of the component is satisfactory, as discussed below with reference to FIGS. 5 and 6.

The thermal inspection method may optionally include at step 46, forming a cascade in the wind tunnel to facilitate generating the external flow of gas over the external surface of the component in accordance with the predetermined Mach number distribution. FIG. 2 depicts an example cascade arrangement. As noted above, the type of cascade employed (number of elements, geometry, and overall arrangement) will be dictated by the desired Mach number distribution. For example, the cascade could be as simple as two shaped walls bounding the component (a two passage cascade), in effect a curved wind tunnel. Similarly, more complex cascade configurations, such as that shown in FIG. 2 may be employed.

As indicated in FIG. 3, the thermal inspection method may optionally include at step 48, heating the gas to the known temperature T prior to supplying the gas into the wind tunnel. This may be accomplished by supplying vitiated air (namely air heated by direct combustion) or non-vitiated air (for example air that is heated by a heat exchanger) to the wind tunnel.

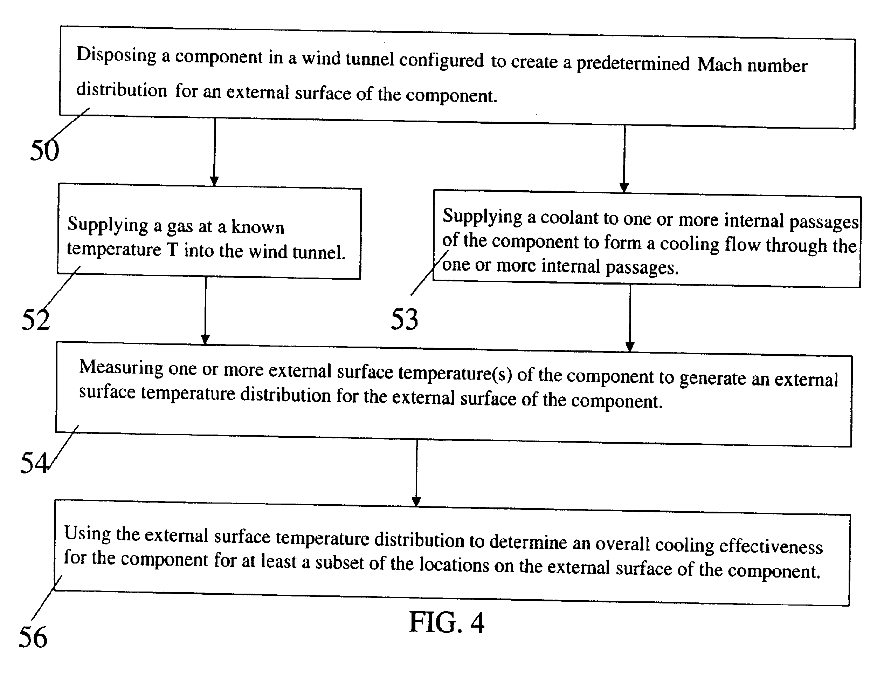

FIG. 4 illustrates a particular form of the thermal inspection method, in which the overall cooling effectiveness for the component is determined. As discussed above, the overall cooling effectiveness value may be controlled by selectively controlling one or more of its three constituents (film cooling effectiveness, internal cooling effectiveness and thermal conductivity of the component). For example, for a low thermal conductivity material, the film effectiveness is biased, and the impact of the internal cooling effectiveness on the external surface is minimal. Thus, the component may be formed from a low thermal conductivity material in the design phase, such that the resulting cooling effectiveness corresponds primarily to the film cooling effectiveness.

In FIG. 4, the external surface temperature distribution may correspond to the measured external surface temperature(s) for multiple locations (indicated by reference numeral 14 in FIG. 1) on the external surface of the component. As indicated in FIG. 4, the thermal inspection method further includes at step 53, supplying a coolant to one or more internal passages (indicated by reference numeral 16 in FIG. 1) of the component to form a cooling flow through the one or more internal passages. The thermal inspection method further includes at step 56, using the external surface temperature distribution to determine an overall cooling effectiveness for the component for at least a subset of the locations on the external surface of the component. According to a more particular embodiment, supplying the coolant to the internal passage(s) of the component at step 53 induces a thermal transient in the component. According to a more particular embodiment, the component is then allowed to come to a steady state temperature in the presence of the external flow and the cooling flow, and the measuring step 54 is performed after the component has reached the steady state temperature. For particular arrangements, the measuring step 54 is performed using infrared radiography, in the presence of the external flow and the cooling flow, to generate the external surface temperature distribution for the external surface of the component.

FIG. 5 illustrates a transient thermal response embodiment of the inspection method. This technique can be used, for example, to generate a comparison with a baseline value to determine whether the thermal performance of the component is satisfactory. In addition, the resulting thermal performance values can be input into a lifing analysis to predict the expected life for the component under test.

In FIG. 5, the external surface temperature distribution may correspond to the measured external surface temperature(s) for multiple locations (indicated by reference numeral 14 in FIG. 1) on the external surface of the component. As indicated in FIG. 5, the thermal inspection method further includes at step 53, supplying a coolant to one or more internal passages (indicated by reference numeral 16 in FIG. 5) of the component to form a cooling flow through the one or more internal passages. At step 51, the coolant is heated prior to being supplied to the one or more internal passages of the component, to induce a thermal transient in the component. For this embodiment, the measuring step 54 is performed over time, such that the generated external surface temperature distribution corresponds to a transient thermal response of the component to the heated coolant.

For the particular embodiment shown in FIG. 5, the thermal inspection method further includes, at step 58, using the transient thermal response to determine at least one of: a combined thermal response for the component, at least one heat transfer coefficient for respective internal passage(s) in the component, and a flow rate through respective internal passage(s). In addition, the illustrated thermal inspection method further includes, at step 60 (quality control inspection), comparing at least one of the flow rate, the at least one heat transfer coefficient, and the combined thermal response of at least a portion of the component to at least one baseline value to determine whether a thermal performance of the component is satisfactory. In this manner, the quality control inspection 60 is accomplished. Example baseline values are described above with reference to the thermal inspection system embodiment of the invention.

FIG. 6 illustrates another thermal transient embodiment of the inspection method. This technique can be used, for example, to generate a comparison with a baseline value to determine whether the thermal performance of the component is satisfactory. Components that fail to meet thermal performance specifications can either be rejected or subjected to rework. In addition, the resulting thermal performance values can be input into a lifing analysis to predict the expected life for the component under test. Moreover, the resulting thermal performance values can be used to trigger part health monitoring (i.e. borescope inspections) in the field or for online prognosis and health management of the component.

For the particular embodiment shown in FIG. 6, the external surface temperature distribution corresponds to the measured external surface temperature(s) for multiple locations on the external surface of the component. As indicated in FIG. 6, the thermal inspection method further includes at step 53 supplying a coolant to one or more internal passages of the component to form a cooling flow through the one or more internal passages. The thermal inspection method further includes at step 57 changing the temperature of the gas supplied into the wind tunnel to induce a thermal transient in the component. For this embodiment, the measuring step 54 is performed over time, such that the generated external surface temperature distribution corresponds to a transient thermal response of the component to the changing of the temperature of the gas supplied into the wind tunnel.

For the particular embodiment shown in FIG. 6, the thermal inspection method further includes, at step 58 using the transient thermal response to determine at least one of: a combined thermal response for the component, at least one heat transfer coefficient for respective ones of the one or more internal passages in the component, and a flow rate through respective ones of the one or more internal passages. In addition, the illustrated thermal inspection method further includes, at step 60 (quality control inspection), comparing at least one of the flow rate, the at least one heat transfer coefficient, and the combined thermal response of at least a portion of the component to at least one baseline value to determine whether a thermal performance of the component is satisfactory. In this manner, the quality control inspection 60 is accomplished.

Beneficially, the thermal inspection method and system of the invention can be used to perform quantitative assessment of production airfoils and other hot gas path components. Further, the above described thermal inspection process can be performed at a variety of manufacturing stages. For example, the inspection can be performed at the initial manufacturing stage and can also be applied to components that have gone through a repair process. In addition, the inspection can be performed for components prior to repair, in order to determine whether repair is needed. For turbine components, the inspection can be performed after investment casting and prior to final machining. The inspection can also be performed after final machining. Further, the inspection can be performed after film holes are formed (post-casting process) and before or after coatings are applied. Moreover, the thermal inspection method and system of the invention can be used to measure thermal performance on test airfoils to screen turbine airfoil cooling designs.

## Claims

1. A thermal inspection method comprising:

   disposing a component (10) in a wind tunnel (20) configured to create a predetermined Mach number distribution for an external surface (12) of the component;
   supplying a gas (22) at a known temperature T into the wind tunnel to create an external flow of gas over the external surface of the component in accordance with the predetermined Mach number distribution;
   directly or indirectly measuring one or more external surface temperatures of the component to generate an external surface temperature distribution for the external surface of the component;

wherein the external surface temperature distribution corresponds to the measured external surface temperature for a plurality of locations (14) on the external surface of the component, wherein the thermal inspection method further comprises:

supplying a coolant (28) to one or more internal passages (16) of the component to form a cooling flow through the one or more internal passages;

**characterized in that** the thermal inspection method further comprises:

i) heating (34) the coolant prior to supplying the heated coolant to the one or more internal passages of the component to induce a thermal transient in the component, wherein the step of measuring the external surface temperature of the component is performed over time, such that the generated external surface temperature distribution corresponds to a transient thermal response of the component to the heated coolant; and/or
ii) changing the temperature (26) of the gas (22) supplied into the wind tunnel to induce a thermal transient in the component, wherein the step of measuring the external surface temperature of the component is performed over time, such that the generated external surface temperature distribution corresponds to a transient thermal response of the component to the changing of the temperature of the gas supplied into the wind tunnel;

the thermal inspection method further comprising using the external surface temperature distribution to perform a quality control inspection of the component.

2. The thermal inspection method of Claim 1, further comprising using the transient thermal response to determine at least one of: a combined thermal response for the component (10), at least one heat transfer coefficient for respective ones of the one or more internal passages (16) in the component, and a flow rate through respective ones of the one or more internal passages.

3. The thermal inspection method of Claim 2, wherein the step of performing the quality control inspection of the component (10) comprises comparing at least one of the flow rate, the at least one heat transfer coefficient, and the combined thermal response of at least a portion of the component to at least one baseline value to determine whether a thermal performance of the component is satisfactory.

4. The thermal inspection method of Claim 1 as per ii) therein, further comprising heating the gas to the known temperature T prior to supplying the gas (22) into the wind tunnel (20).

5. The thermal inspection method of any preceding Claim, further comprising determining the predetermined Mach number distribution for the component (10) to be inspected.

6. The thermal inspection method of any preceding Claim, further comprising forming a cascade (30) in the wind tunnel (20) to facilitate generating the external flow of gas over the external surface (12) of the component (10) in accordance with the predetermined Mach number distribution.

7. The thermal inspection method of any preceding Claim, wherein the step of measuring the external surface temperature of the component (10) comprises using infrared radiography, in the presence of the external flow and the cooling flow, to generate the external surface temperature distribution for the external surface (12) of the component.

**Patentansprüche**

1. Thermisches Inspektionsverfahren, mit den Schritten:

Anordnen einer Komponente (10) in einem Windkanal (20), der zur Erzeugung einer vorbestimmten Machzahl-Verteilung für eine Außenoberfläche (12) der Komponente eingerichtet ist;
Zuführen eines Gases (22) bei bekannter Temperatur T in den Windkanal, um einen äußeren Gasstrom über die Außenoberfläche der Komponente gemäß der vorbestimmten Machzahl-Verteilung zu erzeugen;
direktes oder indirektes Messen von einer oder mehreren Außenoberflächentemperaturen der Komponente, um eine Außenoberflächentemperaturverteilung für die Außenoberfläche der Komponente zu erzeugen;
wobei die Außenoberflächentemperaturverteilung der gemessenen Außenoberflächentemperatur für mehrere Stellen (14) auf der Außenoberfläche der Komponente entspricht, wobei das thermische Inspektionsverfahren ferner die Schritte aufweist:

Zuführen eines Kühlmittels (28) zu einem oder mehreren Innenkanälen (16) der Komponente, um einen Kühlstrom durch den einen oder die mehreren Innenkanäle zu erzeugen;

**dadurch gekennzeichnet, dass** das thermische Inspektionsverfahren ferner die Schritte aufweist:

i) Erhitzen (34) des Kühlmittels vor der Zuführung des erhitzten Kühlmittels zu dem einen oder den mehreren Innenkanälen der Komponente, um einen thermischen Übergangszustand in der Komponente zu induzieren, wobei der Schritt der Messung der Außenoberflächentemperatur der Komponente über der Zeit dergestalt durchgeführt wird, dass die erzeugte Außenoberflächentemperaturverteilung einer vorübergehenden thermischen Reaktion der Komponente auf das erhitzte Kühlmittel entspricht; und/oder

ii) Verändern der Temperatur (26) des in den Windkanal gelieferten Gases (22), um einen thermischen Übergangszustand in der Komponente zu induzieren, wobei der Schritt der Messung der Außenoberflächentemperatur der Komponente über der Zeit dergestalt ausgeführt wird, dass die erzeugte Außenoberflächentemperaturverteilung einer vorübergehenden thermischen Reaktion der Komponente auf die Veränderung der Temperatur des dem Windkanal zugeführten Gases entspricht;

wobei das thermische Inspektionsverfahren ferner den Schritt der Nutzung der Außenoberflächentemperaturverteilung zur Durchführung einer Qualitätskontrolleninspektion der Komponente aufweist.

2. Thermisches Inspektionsverfahren nach Anspruch 1, ferner mit dem Schritt der Nutzung der vorübergehenden thermischen Reaktion, um wenigstens eines zu bestimmen von: einer kombinierten thermischen Reaktion für die Komponente (10), wenigstens einem Wärmeübertragungskoeffizienten für entsprechende von dem einen oder den mehreren Innenkanälen (16) in der Komponente und einer Durchflussrate durch entsprechende von dem einen oder den mehreren Innenkanälen.

3. Thermisches Inspektionsverfahren nach Anspruch 2, wobei der Schritt der Durchführung der Qualitätskontrolleninspektion der Komponente (10) den Schritt des Vergleichs von wenigstens einem von der Durchflussrate, dem wenigstens einen Wärmeübertragungskoeffizienten und der kombinierten thermischen Reaktion von wenigstens einem Abschnitt der Komponente mit wenigstens einem Ausgangswert beinhaltet, um zu ermitteln, ob das thermische Betriebsverhalten der Komponente zufriedenstellend ist.

4. Thermisches Inspektionsverfahren nach Anspruch 1, ii), welches ferner den Schritt der Erhitzung des Gases auf die bekannte Temperatur T vor der Zuführung des Gases (22) in den Windkanal (20) aufweist.

5. Thermisches Inspektionsverfahren nach einem der vorstehenden Ansprüche, ferner mit dem Schritt der Ermittlung der vorbestimmten Machzahl-Verteilung für die zu inspizierende Komponente (10).

6. Thermisches Inspektionsverfahren nach einem der vorstehenden Ansprüche, ferner mit dem Schritt der Ausbildung eines Kaskade (30) in dem Windkanal (20), um die Erzeugung des äußeren Gasstroms über der Außenoberfläche (12) der Komponente (10) gemäß der vorbestimmten Machzahl-Verteilung zu ermöglichen.

7. Thermisches Inspektionsverfahren nach einem der vorstehenden Ansprüche, wobei der Schritt der Messung der Außenoberflächentemperatur der Komponente (10) den Schritt der Nutzung von Infrarotradiografie bei Vorliegen der Außenströmung und des Kühlstroms aufweist, um die Außenoberflächentemperaturverteilung für die Außenoberflächen (12) der Komponente zu erhalten.

**Revendications**

1. Procédé d'inspection thermique, comprenant :

la mise en place d'un élément (10) dans un tunnel aérodynamique (20) configuré pour créer une distribution prédéterminée du nombre de Mach pour une surface externe (12) de l'élément,
l'envoi d'un gaz (22) à une température T connue dans le tunnel aérodynamique pour créer un écoulement externe de gaz sur la surface externe de l'élément, en fonction de la distribution prédéterminée du nombre de Mach,

la mesure directe ou indirecte d'une ou plusieurs températures de surface externe de l'élément, afin de générer une distribution de températures de surface externe pour la surface externe de l'élément,

où la distribution de températures de surface externe correspond à la température de surface externe mesurée pour plusieurs emplacements (14) sur la surface externe de l'élément, le procédé d'inspection thermique comprenant en outre :

l'envoi d'un agent de refroidissement (28) dans un ou plusieurs passages internes (16) de l'élément pour créer un flux de refroidissement dans le ou les passages internes,

**caractérisé en ce que** le procédé d'inspection thermique comprend en outre :

i) le chauffage (34) de l'agent de refroidissement, avant l'envoi de l'agent de refroidissement chauffé dans le ou les passages internes de l'élément, afin d'induire une transitoire thermique dans l'élément, l'étape de mesure de la température de surface externe de l'élément étant exécutée au cours du temps, de manière à ce que la distribution de température de surface externe générée corresponde à une réponse thermique transitoire de l'élément à l'agent de refroidissement chauffé, et/ou

ii) la modification de la température (26) du gaz (22) envoyé dans le tunnel aérodynamique, afin d'induire une transitoire thermique dans l'élément, l'étape de mesure de la température de surface externe de l'élément étant exécutée au cours du temps, de manière à ce que la distribution de températures de surface externe générée corresponde à une réponse thermique transitoire de l'élément à la modification de la température du gaz envoyé dans le tunnel aérodynamique,

le procédé d'inspection thermique comprenant en outre l'utilisation de la distribution de températures de surface externe pour effectuer une inspection de contrôle de qualité de l'élément.

2. Procédé d'inspection thermique selon la revendication 1, comprenant en outre l'utilisation de la réponse thermique transitoire pour déterminer au moins un des points suivants : une réponse thermique combinée pour l'élément (10), au moins un coefficient de transmission thermique pour des passages respectifs parmi le ou les passages internes (16) dans l'élément, et un débit dans des passages respectifs parmi le ou les passages internes.

3. Procédé d'inspection thermique selon la revendication 2, selon lequel l'étape de réalisation de l'inspection de contrôle de qualité de l'élément (10) comprend la comparaison d'au moins un des points suivants : le débit, le coefficient de transmission thermique, au nombre d'au moins un, et la réponse thermique combinée d'au moins une partie de l'élément à au moins une valeur de base pour déterminer si la résistance thermique de l'élément est satisfaisante.

4. Procédé d'inspection thermique selon la revendication 1, tel que défini dans ii), comprenant en outre le chauffage du gaz jusqu'à la température T connue, avant d'envoyer le gaz (22) dans le tunnel aérodynamique (20).

5. Procédé d'inspection thermique selon l'une quelconque des revendications précédentes, comprenant en outre la détermination de la distribution prédéterminée du nombre de Mach pour l'élément (10) à inspecter.

6. Procédé d'inspection thermique selon l'une quelconque des revendications précédentes, comprenant en outre la formation d'une cascade (30) dans le tunnel aérodynamique (20), pour faciliter la génération de l'écoulement de gaz externe sur la surface externe (12) de l'élément (10), conformément à la distribution prédéterminée du nombre de Mach.

7. Procédé d'inspection thermique selon l'une quelconque des revendications précédentes, selon lequel l'étape de mesure de la température de surface externe de l'élément (10) comprend l'utilisation de la radiographie infrarouge, en présence de l'écoulement externe et du flux de refroidissement, afin de générer la distribution de températures de surface externe pour la surface externe (12) de l'élément.

FIG. 1

EP 2 354 783 B1

**FIG. 2**

20

10

| 46 |
| --- |
| Forming a cascade in a wind tunnel |

| |
| --- |
| Disposing a component in a wind tunnel configured to create a predetermined Mach number distribution for an external surface of the component. |

50

| |
| --- |
| Heating a gas to a known temperature T. |

48

| |
| --- |
| Supplying a gas at a known temperature T into the wind tunnel to create an external flow of gas over the external surface of the component, in accordance with the predetermined Mach number Distribution. |

52

| |
| --- |
| Measuring one or more external surface temperature(s) of the component to generate an external surface temperature distribution for the external surface of the component. |

54

| |
| --- |
| Using the external surface temperature distribution to perform a quality control inspection of the component. |

FIG. 3

60

Disposing a component in a wind tunnel configured to create a predetermined Mach number distribution for an external surface of the component.

50

Supplying a gas at a known temperature T into the wind tunnel.

52

Supplying a coolant to one or more internal passages of the component to form a cooling flow through the one or more internal passages.

53

Measuring one or more external surface temperature(s) of the component to generate an external surface temperature distribution for the external surface of the component.

54

Using the external surface temperature distribution to determine an overall cooling effectiveness for the component for at least a subset of the locations on the external surface of the component.

56

FIG. 4

EP 2 354 783 B1

Disposing a component in a wind tunnel configured to create a predetermined Mach number distribution for an external surface of the component.

50

Heating a coolant.

Supplying a gas at a known temperature T into the wind tunnel.

51

Supplying the coolant to one or more internal passages of the component to form a cooling flow through the one or more internal passages.

52

53

Measuring one or more external surface temperature(s) of the component over time to generate an external surface temperature distribution for the component that corresponds to a transient thermal response of the component to the heated coolant.

54

Using the transient thermal response to determine at least one of: a combined thermal response for the component, at least one heat transfer coefficient for the internal passage(s) in the component, and a flow rate through respective ones of the internal passage(s).

58

Comparing with baseline value(s) to determine whether the component's thermal performance is satisfactory

60

FIG. 5

Disposing a component in a wind tunnel configured to create a predetermined Mach number distribution for an external surface of the component. — 50

Supplying a gas at a known temperature T into the wind tunnel. — 52

Changing the temperature of the gas supplied into the wind tunnel to induce a thermal transient. — 57

Supplying the coolant to one or more internal passages of the component to form a cooling flow through the one or more internal passages. — 53

Measuring one or more external surface temperature(s) of the component over time to generate an external surface temperature distribution for the component that corresponds to to the changing of the temperature of the gas supplied into the wind tunnel . — 54

Using the transient thermal response to determine at least one of: a combined thermal response for the component, at least one heat transfer coefficient for the internal passage(s) in the component, and a flow rate through respective ones of the internal passage(s). — 58

Comparing with baseline value(s) to determine whether the component's thermal performance is satisfactory — 60

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009255332 A, Bunker
- US 2001255332 A
- US 6804622 B, Bunker

### Non-patent literature cited in the description

- **JOHNSON L. P. et al.** Measurements with a heat flux microsensor deposited on a transonic turbine blade. *International Congress on Instrumentation in Aerospace Simulation Facilities, IEEE New York,* 1995, 37.1-7